# EUROPEAN PATENT SPECIFICATION

(11) **EP 3 281 163 B1**
(45) Date of publication and mention of the grant of the patent: **13.12.2023**
(21) Application number: 16777111.2
(22) Date of filing: 04.04.2016
(51) Int. Cl.: G06Q 20/36, G06Q 20/38, G06Q 20/40, G06Q 20/02, H04L 9/32, H04L 9/00, G06Q 40/06

(54) **DIGITAL ASSET INTERMEDIARY ELECTRONIC SETTLEMENT PLATFORM**
INTERMEDIÄRE ELEKTRONISCHE ABWICKLUNGSPLATTFORM FÜR DIGITALE ASSETS
PLATEFORME DE RÈGLEMENT ÉLECTRONIQUE INTERMÉDIAIRE D'UN BIEN NUMÉRIQUE

(30) Priority: 05.04.2015 US 201562178315 P
(43) Date of publication of application: 14.02.2018
(73) Proprietor: Digital Asset (Switzerland) GmbH, 8050 Zurich (CH)
(72) Inventor: WILSON, Jr. Donald R., New York, NY 10010 (US); HIRANI, Sunil, New York, NY 10010 (US); SARANIECKI, W. Eric, New York, NY 10010 (US); ROOZ, Yuval, New York, NY 10010 (US); KFIR, Shaul, New York, NY 10010 (US)
(74) Representative: Walaski, Jan Filip
(86) International application number: PCT/US2016/025888
(87) International publication number: WO 2016/164310

(56) References cited:
- WO-A1-2014/201059
- WO-A1-2015/024129
- US-A1- 2002 188 621
- US-A1- 2014 279 540
- US-A1- 2015 127 940
- US-A2- 2013 232 023
- Andreas M. Antonopoulos: "Mastering Bitcoin - Unlocking Digital Cryptocurrencies" In: "Mastering bitcoin : [unlocking digital cryptocurrencies]", 20 December 2014 (2014-12-20), O'Reilly Media, Beijing Cambridge Farnham Köln Sebastopol Tokyo, XP055306939, ISBN: 978-1-4493-7404-4 * Chapter 5; page 99 - page 100 * * page 163 * * page 190 *

## Description

The present disclosure relates to an electronic settlement platform for tracking and settling digital assets, obligations, and transactions.

### BACKGROUND

Existing closed, centrally administered ledgers utilized for settling assets, obligations, and transactions are considered opaque and error-prone. This makes oversight cumbersome, requires many duplicative processes and ledgers, and allows the potential for fraud. The first and currently largest alternative to the existing ledger architectures is represented by a distributed digital ledger called Bitcoin, which uses a "blockchain" data structure. A fundamental principle of Bitcoin's operation is that the system is set up as a peer-to-peer transaction mechanism that utilizes public-private key cryptography, has no central intermediary or central repository, and allows all participants in the network to hold and validate the integrity of a full copy of the ledger in real time. The Bitcoin blockchain was designed in order to create a trustless native asset, bitcoin, which could be exchanged with pseudonymous parties across the globe.

Current platforms built to support digital assets on top of Bitcoin-like or blockchain-like systems are not structured to provide comprehensive protection to financial institutions as may be required by law for many of their existing transaction businesses. These platforms may not have contemplated the regulatory regime for financial institutions and financial transactions in general. As a result, institutional investors have hesitated to enter the digital assets market and have avoided the use of distributed ledgers for their existing businesses.

Andreas M. Antonopoulos: "Mastering Bitcoin - Unlocking Digital Cryptocurrencies", 20 December 2014 (2014-12-20), O'Reilly Media, XP055306939, ISBN: 978-1-4493-7404-4 discloses a multi-signature scheme, wherein any payments made are locked in such a way that they require at least two signatures to release, and a pay-to-script hash (P2SH) address representing a multi-signature script.

### SUMMARY

According to an aspect of the invention, there is provided a digital asset settlement method as set out in claim 5.

Optionally, at least one of the digital assets represents digitized ownership of a conventional asset.

The method may further include receiving from the first user an electronic mechanism for redemption. Optionally, if the transaction does not settle because the condition is not met, the electronic mechanism for redemption is invoked. Optionally, the electronic mechanism for redemption permits the unilateral withdrawal of applicable assets, rights, funds, or contracts, by a depositing user at a preset time in the future. Optionally, the electronic mechanism for redemption comprises a pre-signed authorization for redemption for use in a redeem transaction. Optionally, the electronic mechanism for redemption is automatically invoked.

A non-claimed exemplary embodiment digital asset electronic settlement platform includes nodes, a plurality of which have a copy of a distributed ledger stored thereon; an interface server coupled in signal communication with one of the nodes; a client machine coupled in signal communication with the interface server; a data server coupled in signal communication with the machine; a persistence unit coupled in signal communication with the data server; a cache unit coupled in signal communication with the data server; and a coordination unit coupled in signal communication with the data server.

Optionally, at least one of the persistence unit, cache unit, or coordination unit is embodied in the data server. Optionally, at least one of the persistence unit, cache unit, or coordination unit is embodied in another server. Optionally, the data server provides a link between digital assets and conventional assets. Optionally, the distributed blockchain comprises at least one unused transaction output from a transaction comprising at least one digital asset and at least one conventional asset. Optionally, the digital asset comprises a digital contract. Optionally, the client machine is configured to execute a redeem transaction based on information from the data server, and to record the redeem transaction in the blockchain through the interface server. Optionally, the data server is directly coupled in signal communication with the interface server.

The digital asset electronic settlement platform may further include a timestamp server configured to hash a block of items to be time stamped and publish the timestamped hash.

According to an aspect of the invention, there is provided a program storage device as set out in claim 1. Optionally, at least one of the digital assets represents digitized ownership of a conventional asset.

The program storage device may further include a program instruction to receive from the first user an electronic mechanism for redemption. Optionally, if the transaction does not settle because the conditional is not met, the electronic mechanism for redemption is invoked.

### BRIEF DESCRIPTION OF THE DRAWINGS

Illustrative, non-limiting exemplary embodiments may be more clearly understood from the following detailed description, particularly when taken in conjunction with the accompanying drawings, in which:
Figure 1 is a flow diagram for a chain of ownership in which each digital asset payor transfers a digital asset to each successive recipient, in turn, by digitally ratifying a record including a hash of the previous transaction and the rights of the recipient;
Figure 2 is a hybrid diagram for a digital asset timestamp server that takes a hash of a block of items to be time stamped and widely publishes the hash;
Figure 3 is a tree diagram for hierarchical interaction with settlement services of the digital asset intermediary electronic settlement platform in accordance with an exemplary embodiment of the present inventive concept;
Figure 4 is a schematic diagram for a digital assets intermediary electronic settlement user application in accordance with an exemplary embodiment of the present inventive concept;
Figure 5 is a graphical diagram for a user interface of a digital asset intermediary electronic settlement platform in accordance with an exemplary embodiment of the present inventive concept;
Figure 6 is a graphical sub-portion of Figure 5;
Figure 7 is a graphical sub-portion of Figure 5;
Figure 8 is a graphical sub-portion of Figure 5;
Figure 9 is graphical sub-portion of Figure 5;
Figure 10 is graphical sub-portion of Figure 5;
Figure 11 is a dependency diagram showing a transaction dependency during a funding process in accordance with an exemplary embodiment of the present inventive concept;
Figure 12 is a sequence diagram showing a digital asset funding process in accordance with an exemplary embodiment of the present inventive concept;
Figure 13 is a sequence-diagram showing a redeem-refresh process in accordance with an exemplary embodiment of the present inventive concept;
Figure 14 is a state chart showing settlement states in accordance with an exemplary embodiment of the present inventive concept;
Figure 15 is a sequence diagram showing staging of unused transaction outputs (utxos) for successful settlement processing in accordance with an exemplary embodiment of the present inventive concept;
Figure 16 is a sequence diagram showing a successfully matched contra digital asset/conventional currency transaction process in accordance with an exemplary embodiment of the present inventive concept;
Figure 17 is a sequence diagram showing an expired settlement process in accordance with an exemplary embodiment of the present inventive concept;
Figure 18 is a sequence diagram showing a withdraw from digital assets intermediary electronic settlement multi-party ratification application to digital assets intermediary electronic settlement user applications process in accordance with an exemplary embodiment of the present inventive concept;
Figure 19 is a sequence diagram showing a digital assets intermediary electronic settlement user's unilateral-redeem process in accordance with an exemplary embodiment of the present inventive concept; and
Figure 20 is a schematic diagram for a hardware architecture that can be used to implement a digital asset intermediary electronic settlement platform in accordance with an exemplary embodiment of the present inventive concept.

### DETAILED DESCRIPTION

The present inventive concept will be described more fully with reference to the accompanying drawings, in which exemplary embodiments are shown. The present inventive concept may, however, be embodied in many different forms and should not be construed as being limited to the embodiments set forth herein. Like reference numerals may refer to like elements throughout this disclosure.

The present inventive concept provides a digital asset settlement platform. An exemplary embodiment digital asset electronic settlement platform includes nodes, some nodes having a copy of a distributed blockchain and/or reference data stored thereon; interface servers coupled to the nodes; client machines coupled to the interface servers; a data server coupled to the client machines; a persistence unit coupled to the data server; a cache unit coupled to the data server; and a coordination unit coupled to the data server.

Without limitation, an exemplary embodiment of the present inventive concept describes utilizing a "wallet", which is a key store application that may control and include a store of private keys and their corresponding public keys. These keys enable the ratification, here a signature, of a transaction, right or contract on a distributed ledger. Controlling the private key represents control of the asset, right or contract that is held by a corresponding public key.

A digital asset electronic settlement platform in accordance with an exemplary embodiment of the present inventive concept includes nodes, some of which maintain a full copy of a distributed blockchain stored thereon; interface servers coupled to the nodes; client machines coupled to the interface servers; a data server coupled to the client machines; a persistence unit coupled to the data server; a cache unit coupled to the data server; and a coordination unit coupled to the data server. Some nodes, such as signing servers, for example, may optionally store only a partial copy of the distributed blockchain.

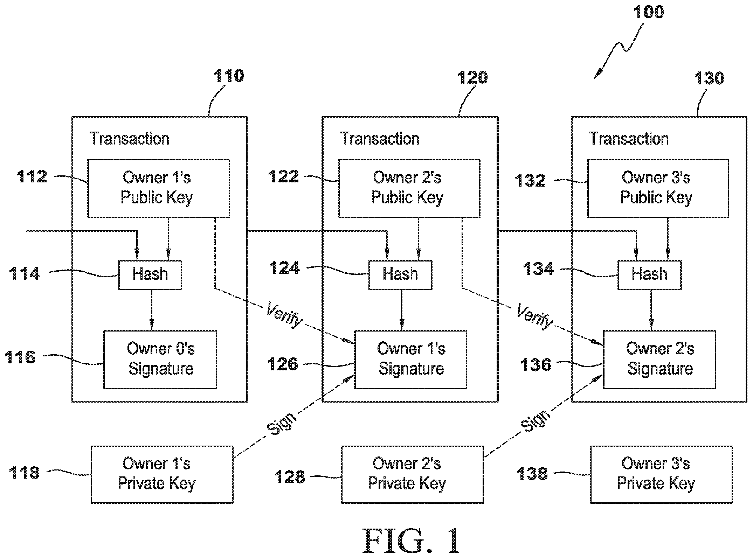

As shown in Figure 1, a chain of ownership for a generic digital asset is indicated generally by the reference numeral 100. In a first transaction 110, Owner 0 transfers ownership of a digital asset to a next Owner 1 by applying her Owner 0's digital signature 116, based on her private key, to a cryptographic hash 114 of the combination (e.g., concatenation, without limitation) of the previous transaction's output combined with the public key 112 of the next Owner 1. In a second transaction 120, Owner 1 transfers ownership of the same digital asset to a next Owner 2 by applying his Owner 1's digital signature 126, based on his Owner 1's private key 118, to a cryptographic hash 124 of the combination of the previous transaction 110's output combined with the public key 122 of the next Owner 2. In a third transaction 130, Owner 2 transfers ownership of the same digital asset to a next Owner 3 by applying her Owner 2's digital signature 136, based on her Owner 2's private key 128, to a cryptographic hash 134 of the combination of the previous transaction 120's output combined with the public key 132 of the next Owner 3.

It shall be understood that the use of a public key or signature is merely a non-limiting exemplary embodiment for ease of description herein, where this private form may be used for denoting that a corresponding entity has an ownership or disposition right over a digital asset, which right may be exercised by signing with the corresponding public key. The present inventive concept shall not be limited thereto, and may alternately use a more general notation for defining rights in a broader or more flexible manner, such as, for example, specifying that for a fixed duration, such as for the next 24 hours, entity A has the ownership or disposition right to sign over a digital asset, and thereafter that entities B and C must both sign.

A cryptographic hash is a fixed-length 'fingerprint' of an arbitrarily-large amount of data. The same cryptographic hash will always result from the same data, but modifying the data by even one bit will significantly change the cryptographic hash. The cryptographic hash of a combination (e.g., concatenation) of the transaction's output and public key of the next owner is appended to the end of the chain of ownership. A recipient may verify the cryptographic hashes and digital signatures to verify the chain of ownership.

To accomplish this without a trusted third party, transactions are publicly broadcast and a system is employed for participants to agree on a single history of the order. The recipient desires proof that, at the time of each transaction, all properly functioning nodes of a plurality of digital asset nodes agreed that it was received and verified as valid.

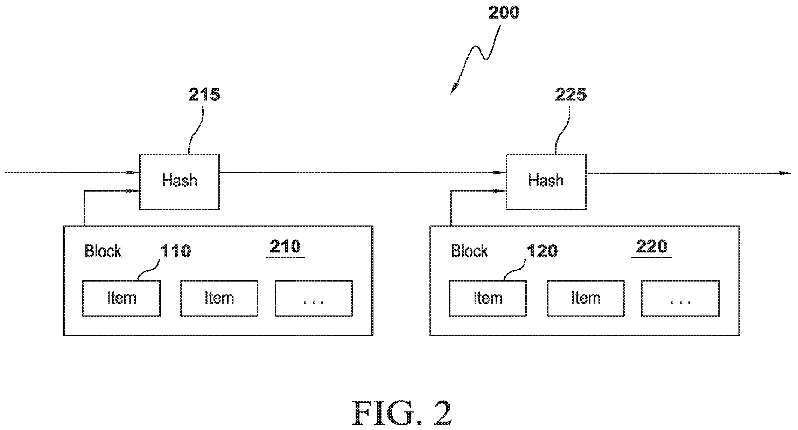

Turning to Figure 2, one exemplary solution for providing such proof is to utilize a timestamp server. The timestamp server implements a process 200 that takes a cryptographic hash 215 of the combination (e.g., concatenation, without limitation) of a previous hash combined with a block 210 including one or more items, here including item 110 that is the transaction 110 of Figure 1, to be time stamped, and widely publishes the cryptographic hash. Such timestamp shows that the data within the block 210, including recordation of the transaction item 110, existed at the time the block 210 was formed in order to get into the cryptographic hash 215. Once Owner 1 authorizes the transaction 120 of Figure 1, this transaction item 120 may be included in a subsequent block 220, which is cryptographically hashed in combination with the output of the previous hash 215. Thus, each timestamp includes the previous timestamp in its hash to form a blockchain, with each timestamp reinforcing the timestamp before it.

The digital asset electronic settlement platform may include a timestamp server configured to hash each block of items to be timestamped and publish the timestamped hash by appending it in chronological order to the distributed ledger, such that the order of timestamped blocks is the same in all copies of the distributed ledger maintained on different properly-functioning nodes. In a preferred embodiment, the items are transactions. Block timestamping may be used alone or in conjunction with item or transaction timestamping. In an alternate embodiment, transaction timestamping may be used in lieu of block timestamping. When transaction timestamping is used alone or in conjunction with block timestamping, the ordering of transactions within a block may, but need not, be chronological.

In exemplary embodiments of the present disclosure, such a blockchain is maintained by a network of communicating nodes running a common network protocol. Transactions of the form payor A transfers digital asset Y to recipient B are broadcast to the network. Network nodes can validate these transactions, add the transactions to that node's copy of the ledger, and then broadcast these ledger additions to other nodes.

To independently verify the chain of ownership and particular digital asset, the network nodes store a copy of the blockchain. Although various approaches may be employed in different distributed blockchain networks, including proof-of-work, proof-of-stake, Practical Byzantine Fault Tolerance (PBFT), and the like, a proof-of-work approach such as Bitcoin's typically allows for a new block to be generated once per time interval, such as once approximately every ten minutes in the Bitcoin network. Each new block incorporates a group of accepted transactions, and is added to the blockchain, which is promptly published to substantially all nodes. This allows such a distributed blockchain system to determine when a particular digital asset has been transferred or used. Determining when a particular digital asset, or portion thereof, has been used is necessary to prevent double usage or double-spending in an environment with no central authority.

The present inventive concept provides a digital asset settlement platform supporting contra transactions as well as linkages between digital assets and conventional assets. In particular, highly-regulated financial institutions and institutional investors are provided a mechanism within the platform via which they may prudently enter digital asset markets while complying with required standards of transparency, risk management, and regulation.

In accordance with the principles of the present inventive concept, a digital asset settlement platform, such as, for example, a digital assets intermediary settlement platform with an application layer of trust, may be configured to provide settlement services for digital assets which can be defined to include fungible assets, references to title for an asset, an obligation, a credit, and/or an authorization, without limitation. Such a settlement platform may operate electronically as a digital asset intermediary electronic settlement platform.

A digital asset intermediary electronic settlement platform may provide a link between digital assets, such as crypto-currencies, and other established asset classes, such as conventional currencies, securities, and the like. Such a digital asset intermediary electronic settlement platform supports a redemption transaction.

For illustrative purposes, the present inventive concept is shown as applied to an exemplary distributed, peer-to-peer transactional network known as Bitcoin. However, it shall be understood that the principles of the present inventive concept may be implemented for any distributed, peer-to-peer transaction network.

To some degree, all transactions in the world operate on the basis of trust. For example, when a customer walks into a coffee shop, the merchant and customer trust each other to fulfill their sides of a transaction; the merchant will deliver the coffee and the customer will deliver payment. In a more complex example, when an international business converts Euro revenue into U.S. Dollars, middlemen intermediate the transaction to provide added levels of security.

Traditionally, the only way to scale trust was to concentrate activity into trusted, and by extension often very large, third parties. Trusted third parties have positive and negative externalities. On one hand, trusted third parties have tremendous standards of control and visibility, but on the other hand, they also represent concentrated single points of failure. In the modern world of cybercrime, this risk has become heightened. The question also arises as to who scales trust across trusted third parties. This has fallen on governments or even larger trusted third parties that specialize in these relationships. For the biggest transactions in the world, layers of trusted third party and government interaction exist to enforce and settle transactions. This is inefficient and may be increasingly difficult to secure.

Distributed, peer-to-peer transactional networks are designed to do away with the necessity of trusted third parties. The protocols of the distributed networks are designed to allow counterparties to execute transactions directly; however, without middlemen agreeing to execute transactions on behalf of their customers, transactions in a distributed, peer-to-peer transactional network may lack controls. Such lack, in turn, may expose users to counterparty risk, irreversible erroneous trades, and participants exceeding risk limits.

Without an intermediary, a peer-to-peer transaction of any size can flow from any member to any other member of the network. This means, for example, that a transaction with a value of $1 billion has the same requirements and security to transact in a distributed network as would a transaction for $0.000000001. While the underlying protocol of the distributed network needs to be robust and secure for the largest transactions, it is also beneficial to provide a system that scales or speeds even the smallest transactions in a network.

The present inventive concept creates scale, speed, and security by introducing a layer of trust on top of a distributed, peer-to-peer transactional network. The present inventive concept allows trusted third parties to verify, ratify, and approve transactions with confidence and digital efficiency.

A distributed ledger can be viewed as a completely accessible filing system or database, where 'completely' in this context means access to the database may be available, in its entirety, to the participants in the network. Access to the information in the database may be limited according to security and privacy requirements and enforced in the data structure itself. It is critically important for the filing system to be free from any single user's unilateral ability to alter the stored data. In order to accomplish this, many distributed, peer-to-peer transactional networks assume that transactions take place in a truly intermediary-free environment. However, this ignores the benefits to trusted intermediaries in a system.

An exemplary embodiment platform of the present inventive concept adds a layer of trust where users must be known to digital asset member entities and operate according to the rules of their membership. Procedurally, the platform cannot unilaterally control the user's assets. The platform may ensure that users are executing any "transaction", or ledger entry, as intended and according to the rules set forth by digital asset members who provide them with services. For example, in doing so, the platform provides financial institutions with tools to verify digital asset transactions, including contra transactions containing at least one digital asset, allowing them to settle quickly, efficiently, and securely.

By using a distributed ledger, whether public, semi-public, or private, embodiments of the present inventive concept provide the added benefit of having a transactional system that shows 'transactions' in real time and provides the possibility to show transactions to any regulator or appropriate governing body.

In accordance with the principles of the present inventive concept, a digital asset intermediary electronic settlement platform supports intermediary services for digital assets. A digital asset intermediary electronic settlement platform offers an integrated approach between digital assets and other established asset classes. For example, a digital asset electronic settlement platform provides the missing link between digital assets and the highly-regulated financial institutions and institutional investors that thus far have avoided entering the digital assets market.

The term `digital asset' is used herein to include the digital embodiment of an established asset class, obligation, contract, or explicit authorization. For example, the legally binding document for a stock is a paper certificate and pursuant to the present inventive concept, a digital token can be created that contains a digital form of that stock certificate. In addition, exemplary embodiments of the digital asset intermediary electronic settlement platform of the present inventive concept can be used as a replacement for conventional asset settlement platforms and ledgers. Examples of such conventional asset settlement platforms and ledgers include, but are not limited to, electronic assets such as, for example, electronic securities, electronic contracts, and the like.

Any conventional security can be digitized on a distributed ledger and made eligible for inclusion in the digital asset intermediary electronic settlement platform as an electronic security. Such encrypted digitized securities can thereby be augmented, validated and transferred electronically from one or more qualified and known users to other users in real time. Examples of such conventional securities include, but are not limited to, private and public stock, private and public bonds, commercial paper, derivative securities (forwards, futures, options or swaps), obligations, authorizations, contracts, or any other financial asset.

Any contract can be digitized on a distributed ledger and made eligible for inclusion in the digital asset intermediary electronic settlement platform as an electronic contract. Such an encrypted digitized contract can thereby be validated and transferred electronically from one or more qualified and known users to other users in real time. Examples of such contracts include, but are not limited to, derivative contracts (forwards, futures, options or swaps), purchase or sale agreements, loans, repo (sale and repurchase) agreements, reverse repo (purchase and resale) agreements, wills, insurance policies, surety bonds, service agreements, contractual obligations, or any other contractual arrangement.

Examples of additional digital assets that can be digitized and made eligible for inclusion in the digital asset intermediary electronic settlement platform, and can thereby be validated and transferred electronically from one or more qualified and known users to other users in real-time, include, but are not limited to, foreign exchange (digital or conventional), mineral rights, air rights, sewage rights, mining rights, titles (car, house, and the like), mortgages, reward points or airline miles, and the like.

In an exemplary embodiment, any digital asset (such as, for example, but not limited to, a quantity of bitcoin) may be associated with a unique identifier or right on a distributed ledger which may, in some ledger implementations (e.g., those using unused transaction outputs or "utxo"), be referred to as a token. The present inventive concept is not limited to exemplary utxo implementations or tokens, and is compatible with alternate distributed ledger implementations, such as, for example, Ethereum, without limitation. The combination of a unique right or token as a proof of ownership and a hash of the digital asset data can be passed through the present inventive concept and recorded on a public, semi-public or private distributed ledger network. The digital asset intermediary electronic settlement platform of the present inventive concept will help process digital asset exchanges for conventional currency or corresponding established asset classes that are denominated in such currencies. Through a digital asset intermediary electronic settlement platform of the present inventive concept, members or regulators or both may have the ability to monitor and react in real time to transactions taking place in the digital asset marketplace.

An exemplary embodiment digital asset intermediary electronic settlement platform of the present inventive concept helps fill a gap between newly created digital assets such as bitcoin, which exist in a relatively unregulated marketplace with relatively limited oversight, and established regulated financial institutions. The digital asset intermediary electronic settlement platform extends to include new and established asset classes which have been digitized on a distributed ledger. The electronic settlement system of the present inventive concept allows for members to enforce behavior of its users while allowing the users to be the custodians of their digital assets. The settlement system allows the recordation, tracking, and settlement of transactions provided that the transactions adhere to pre-set limitations. Should the settlement system not settle a transaction because pre-set limitations are not met, authorizations may be used that have been pre-signed to permit the unilateral withdrawal of the applicable rights from the settlement system at a preset and known time in the future by the user. This concept is referred to as a `redeem transaction'. The digital asset intermediary electronic settlement system cannot unilaterally move rights, nor can it prevent users from exiting the system. This is achieved by one of several alternative mechanisms for pre-forfeit of control over rights, the simplest currently contemplated being that both the user and the settlement system pre-sign transactions which become valid in a preset time in the future, and which return rights to applications or wallets that are under the sole control of the respective users.

The digital asset intermediary electronic settlement platform of the present inventive concept helps provide financial institutions and their customers with certain benefits in the digital assets marketplace. In particular, the digital asset intermediary electronic settlement platform of the present inventive concept helps prevent fraudulent transactions, avoid counterparty risk, verify rights and funds, and allows account oversight; this is enabled without requiring that members hold or handle digital assets and without transferring title to such assets to the settlement system.

An exemplary embodiment digital asset intermediary electronic settlement platform of the present inventive concept includes a process for onboarding a carefully selected subset of participants. A trusted network of members (e.g., financial institutions) is established. When utilizing the digital asset intermediary electronic settlement platform of the present inventive concept, the risk of a single point of failure is avoided without exposing participants to the necessity of dealing with completely unknown or anonymous counterparts. Settlement can be limited to be available only with known users. Because settlement is achieved with custody of digital assets remaining under control of the user, the custodian requirement of an exchange is avoided, thus allowing the users to avail themselves of the price discovery function of an exchange without exposing themselves to the risk of unauthorized loss of title to those assets. Regulated members will be the custodians of conventional rights and funds, and users will be the custodians of their own digital assets. This distributes the system across many custodians and provides added layers of security.

An exemplary embodiment of the digital asset intermediary electronic settlement platform of the present inventive concept provides for an intermediary platform for digital assets. Utilizing a digital asset intermediary electronic settlement platform allows multiple current applications to use the platform and provides a foundation for accommodation of future as yet unspecified and unknown future digital assets. This system allows for the atomic settlement of digital assets for conventional assets or digital assets for other digital assets. In this context, 'atomic' means inherently linked in the sense that one leg of the transfer cannot occur without the other. Any transaction that flows through the system can be audited for compliance, reporting, valuation, risk management or other purposes. Digital assets, transactions, obligations, and agreements can be tracked. Risk department monitoring and control tools can be applied to digital assets. Back office monitoring tools and business logic can be imposed. The electronic settlement system adds a layer of business logic between the participants and the distributed ledgers. In this context, `business logic' means conditions which must be satisfied to meet the intended business criteria for the asset and/or transaction in question. An example would be the imposition of a pre-agreed framework of limits. Digitization of business logic offers the potential for significant economies of scale.

Typical multi-signature or multi-party ratification schemes do not inherently impose limits upon any of the individual authorizers in the scheme, whereas an exemplary embodiment of the digital asset intermediary electronic settlement platform of the present inventive concept allows for sharing of assets in an application or wallet with specific individual limits by private key signature, for example. This key store application or `wallet' architecture allows for multiple users to share resources greater than the limit of any single participant, a necessary requirement for institutions seeking to manage the activities of their authorized employees, both individually and in the aggregate. The digital asset intermediary electronic settlement platform of the present inventive concept can impose this same business logic for the settlement of any contra-transaction between two assets in which at least one of the assets is a digital asset, for example and can be extended to include many assets and parties in a single transaction.

An exemplary embodiment of the digital asset intermediary electronic settlement platform of the present inventive concept is a network of multi-signature key store applications ('wallets') pseudonymously known to each other. User wallets contain public keys that are known to the network, but the private keys reside solely under the control of the user. The present inventive concept contemplates that users will secure such private keys using any one of a number of alternative frameworks. Digital asset intermediary electronic settlement platform multi-signature wallets contain one or more unique private keys with the user and one or more unique private keys with a digital asset intermediary electronic settlement platform server. Users transfer digital assets to the control of a multi-signature wallet, in which the digital asset intermediary electronic settlement platform server controls at least one private key, in order to participate in the settlement system. Transactions in the system occur from multi-signature wallets to multi-signature wallets within the closed network and require a ratification in the form of an approval signature from the digital asset intermediary electronic settlement platform server. The digital asset intermediary electronic settlement platform server cannot transfer control of digital assets unilaterally because the digital asset is held in multi-signature wallets over which the user has sufficient control to prevent a transfer without its authorization. Additionally, the digital asset intermediary electronic settlement platform server cannot withhold, nor be used to withhold, digital assets against a user's will. The digital asset intermediary electronic settlement platform server pre-authorizes a `redeem' transaction, which authorizes the redemption of digital assets from the multi-signature wallet back to the user wallet after the passage of a specified period of time, for example. After the specified period of time has passed, the user may therefore unilaterally control her asset without further action required by the digital assets intermediary electronic settlement platform.

By utilizing a digital asset intermediary electronic settlement platform in accordance with the principles of the present inventive concept, trusted third parties can continue to monitor and exercise behavioral control of digital assets without having to be the legal custodian. This allows users to truly control their assets, and trusted third parties to continue to enforce legal behavior and provide settlement efficiencies. The digital asset intermediary electronic settlement platform in accordance with the principles of the present inventive concept provides a closed loop of known entities within a larger network. In order to participate, users must use the digital asset intermediary electronic settlement platform and wallets, enter and exit the loop in accordance with the procedure, and adhere to the behavioral rules of the system.

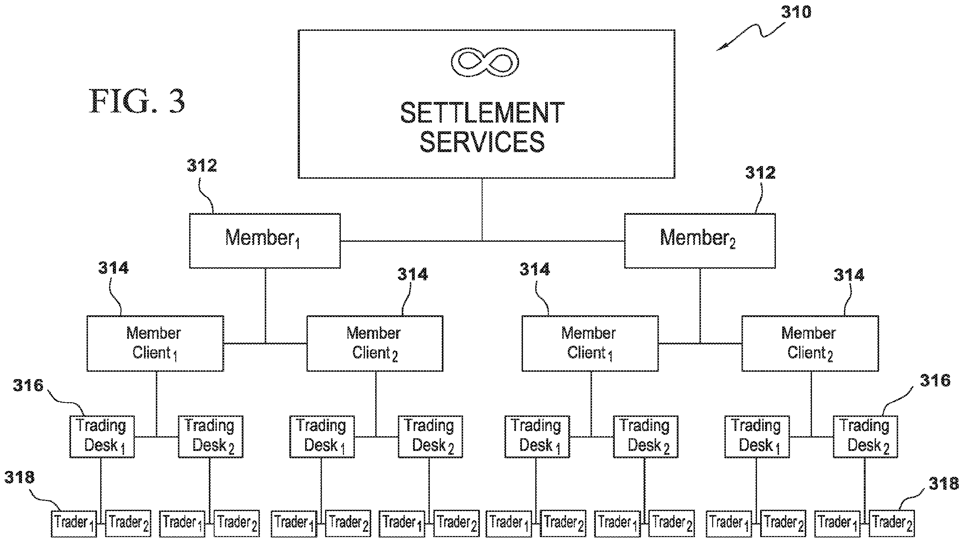

Referring to Figure 3, a general, schematic overview of exemplary parties interacting with the digital asset intermediary electronic settlement platform 310 of the present inventive concept is provided. A group of members 312 is seen. Members 312 are in a position to perform financial industry standard due diligence such as, for example, anti- money laundering (AML) compliance with anti-bribery and corruption regulations, including Bank Secrecy Act (BSA), Foreign Corrupt Practices Act (FCPA), and critical AML mandates like Know Your Customer (KYC) and Customer Information Program (CIP).

Members 312 are in a position to open and manage accounts, analyze and set limits, and provide strategic counseling. Members 312 of the digital asset intermediary electronic settlement platform manage implementations relating to conventional currency transfer, while the digital asset intermediary electronic settlement platform serves as a facilitator for the transfer of digital assets during a trade settlement. Members of the digital asset intermediary electronic settlement platform 310 avoid counterparty risk, decoupling price discovery from the custody of right and funds.

Member 312 can utilize the digital asset intermediary electronic settlement platform 310 to onboard member's clients, and let these member's clients settle digital asset trades among themselves while controlling risk without any direct custody of digital assets. While not formally required to be, the members 312 may be financial institutions.

Under the members are member's clients 314. Member's clients 314 have a desire to settle transactions and manage risks. Again, while formally not required to be, typically the member clients 314 will be clients of the members 312 such as, for example, a multinational corporation which customarily utilizes various services provided by its members.

A number of trading desk units 316 are deployed. The trading desk units 316 can be set up to settle digital assets. Examples of trading desk units 316 can include treasury, corporate risk-management, departmental risk-management, inter-currency risk-management, proprietary trading groups, and the like. Each trading desk unit 316 can, but does not necessarily need to, include a plurality of authorized traders 318.

Users are supported by several hardware and software components that may include, for example, a front end, a user key store application or 'wallet', and a digital asset intermediary electronic settlement platform server. The front-end, user interface level, may include user-facing screens including system overview, dashboards, risk console, and log console. Dashboard screens visualize what is happening at each stage. In addition, interactive screens let the participant enter trades and see live results and/or notifications (for example, relating to the invalidity of a trade).

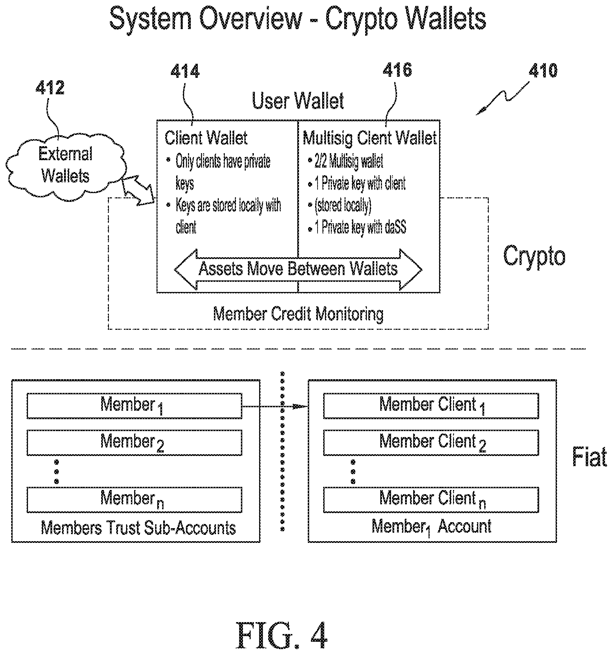

Referring to Figure 4, in one exemplary embodiment of the present inventive concept a digital asset intermediary electronic settlement wallet 410 is provided. The digital asset intermediary electronic settlement wallet 410 comprises a multi-signature user wallet 414 and a multi-signature settlement wallet 416. In the multi-signature user wallet 414, only the user has control of the private keys. The private keys are stored locally with the multi-signature user wallet 414. The multi-signature settlement wallet 416 interacts with other digital wallets 412 in a manner that is known in the art.

In one exemplary embodiment of the present inventive concept, on the direction of the user, the inventive concept validates and enables asset transactions between the multi-signature user wallet 414 and the multi-signature settlement wallet 416. The multi-signature user wallet 416 comprises a user private key and a digital asset intermediary electronic settlement platform private key. Private keys (except one) are stored locally with the multi-signature user wallet 416. The intermediary private key is the last and mandatory signature on settlements. The digital asset intermediary electronic settlement platform private key resides on the digital asset intermediary electronic settlement platform server and is strictly conditioned on the user member's limits and matching a contra-transaction.

By utilizing a digital asset intermediary electronic settlement platform in accordance with the principles of the present inventive concept, members can participate in live scenarios, including a successful settlement, where the platform settles a valid transaction; an erroneous or invalid transaction, known as a "bad" transaction; and member client onboarding, where a member adds a new member client to the digital asset intermediary electronic settlement platform to become a platform user. Transactions can be originated by various means, such as for example either in the over-the-counter market (for example, by telephone) or on an exchange or both. While a scenario is running, the member can inspect dashboards for the member, the member client, and the member's risk management function, as well as digital asset intermediary electronic settlement platform log screens for operations functions. In a successful over-the-counter transaction, the two participants sit at different computers and independently report trade details to the digital asset intermediary electronic settlement platform server using a trade entry tool. In a successful exchange-executed transaction, the exchange notifies the digital asset intermediary electronic settlement system of exchange-originated transactions that have been validated and executed.

The following summarizes an exemplary settlement request process. Initially, trader Ta opens the trade entry tool. Trader Ta initializes trade entry tool, and the dashboard recognizes Trader Ta as active. The application informs Trader Ta's trade entry tool of current credit limits for Trader Ta, as set in a risk console. Meanwhile, Trader Tb also opens the trade entry tool. Trader Tb initializes trade entry tool, and the dashboard recognizes Trader Tb as active. The application informs Trader Tb of current credit limits for Trader Tb, as set in the risk console.

Trader Ta fills a ticket specifying asset, quantity, price, and counterparty; and authorizes via a cryptographic signature. A new transaction number is assigned, funds for the settlement are earmarked from Trader Ta and/or a Trader Ta member, and the dashboard displays a Trader Ta ticket indicating the ticket as yet unfilled. A countdown timer starts, counting down a trading time (for example, 15 minutes). The dashboard also displays the Traders' credit limits. Meanwhile, Trader Tb also fills a ticket specifying asset, quantity, price, and counterparty; and authorize/use/spend. Trader Tb submits the ticket for contra side of trade. The Trader Tb ticket becomes valid, a positive visual appears such as, for example, the ticket being greyed out, Trader Ta and Trader Tb tickets merge, the ticket pushed off to accepted trades bin.

The following summarizes an exemplary successful transaction settlement process. A credit-limit ticker flashes and gets updated. A short amount of time (for example, 0.5 sec) passes. Simultaneously, a signature visual flashes and becomes valid, indicating 2/2 or 3/3 or 4/4 (or any number of signatures where the settlement system signature is required) use/spend signature and a conventional currency such as, for example, U.S. Dollar, pie-chart flashes and updates, indicating that the system is instructing the member of Trader Tb to send conventional currency to the member of Trader Ta. The market data feed is updated to include the price and quantity details of the successful settlement. The successful settlement details are also sent simultaneously via an Application-Programming Interface (API) to Trader Ta and Trader Tb's members, allowing these members to submit appropriate regulatory documentation.

A bad transaction scenario can result from, for example, a human error, a limit reached, an attempt to defraud the system, potential bugs, and the like. Errors are reported on the trader trade entry tool, risk dashboard, and member risk dashboard. The following summarizes an exemplary bad transaction occurring due to an `out of credit' scenario. Trader Ta tries to submit, for example, a 1000 bitcoin trade with Trader Tb, who only has credit authorization for a 500 bitcoin trade. If the trade has originated over-the-counter, Trader Ta's trade entry tool indicates a bad transaction by, for example, turning red and graying out the 'submit' button. The trade entry tool title bar messages the problem, for example displaying "Trader Tb Does Not Have Sufficient Credit to Complete This Trade." If the trade is attempted on an exchange, Trader Tb's limits are known to and enforced by the exchange.

The following summarizes an exemplary bad trade due to an `above authorized clip size' scenario. Trader Ta tries to submit, for example, a 1000 bitcoin trade with Trader Tb, while Trader Ta is not allowed to trade more than, for example, 100 bitcoin at a time. Trader Ta's trade entry tool indicates a bad transaction such as by, for example, turning red and graying out the 'submit' button. The trade entry tool title bar messages the scenario such as, for example, displaying "Trader Ta Has Exceeded Clip Limit Size". If the trade is attempted on exchange, Trader Tb is prevented from executing orders that exceed 100 bitcoin at a time.

The following summarizes an exemplary bad transaction due to an `unauthorized trader' scenario. An unauthorized user attempts to submit a trade at Trader Ta's trade entry tool. To activate the 'Submit' button requires a user to provide a trader-specific passphrase. The entered passphrase is incorrect. The trade entry tool indicates a bad transaction such as by, for example, turning red, and greying out the 'submit' button. If the process is repeated a given number of times such as, for example, three times, the trade entry tool is no longer valid and the user's wallet will be assumed to be compromised. The digital asset intermediary electronic settlement platform server initiates contact with the member client and member outside of the system as a means to establish a safe withdrawal from the digital assets intermediary electronic settlement platform, or other correction of the situation.

The following summarizes an exemplary over-the-counter bad transaction due to an `incorrect trade details' or `wrong limit' scenario. Trader Ta submits trade for example 1000 bitcoin with Trader Tb; Trader Tb submits a trade for example 100 bitcoin with Trader Ta. The matching engine waits a given interval (for example, 15 minutes) for both tickets to find a match. The trader trade entry tool shows a pending queue of trades yet to be confirmed. If a trade in the queue approaches the end of the interval, then the line item goes into a `Critical Queue' that shows unmatched trades that are about to expire. The system shows logs of unmatched trades, including matched or expired trades. Trades being reported to the system for settlement from exchanges have already been matched by the exchange. There are numerous additional examples of potential bad transaction scenarios that the system can be designed to identify

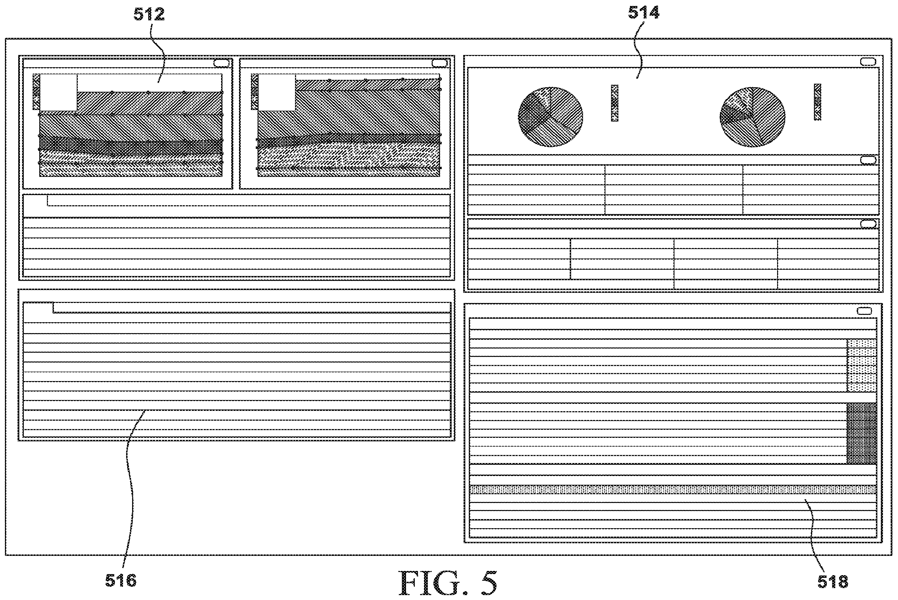

Figures 5-10 set forth exemplary graphical user interfaces which enable users to interact with the digital asset intermediary electronic settlement platform of the present inventive concept; these examples are only one of several alternatives that are contemplated by the current inventive concept and are intended to be non-limiting.

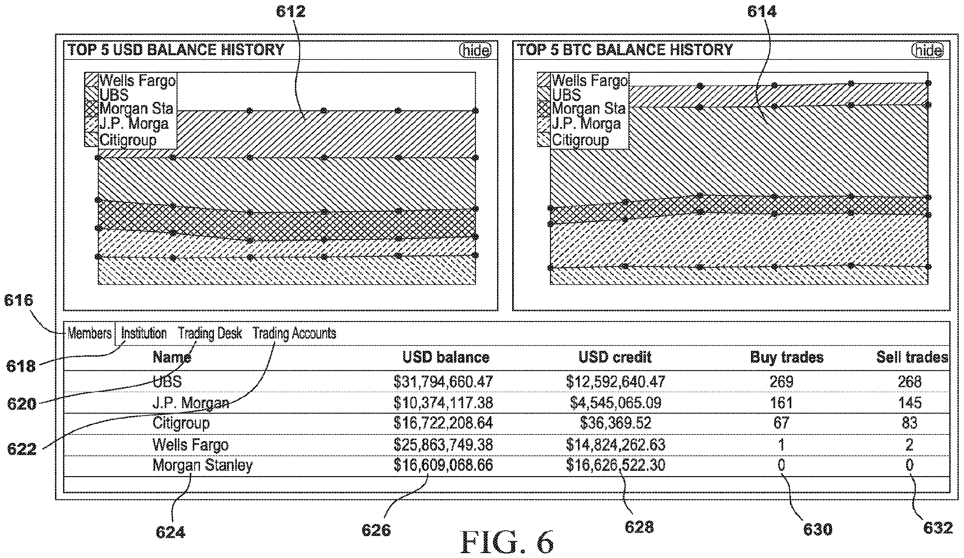

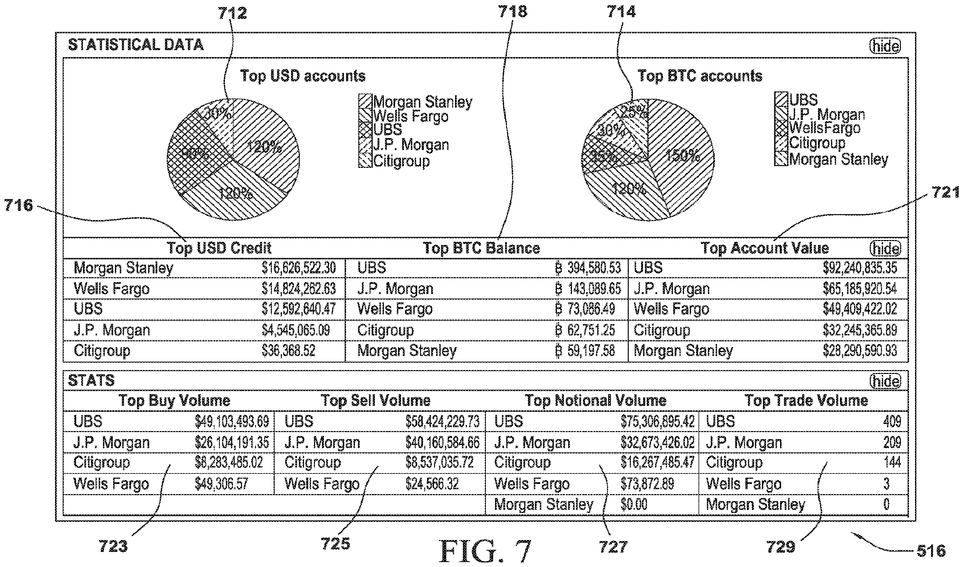

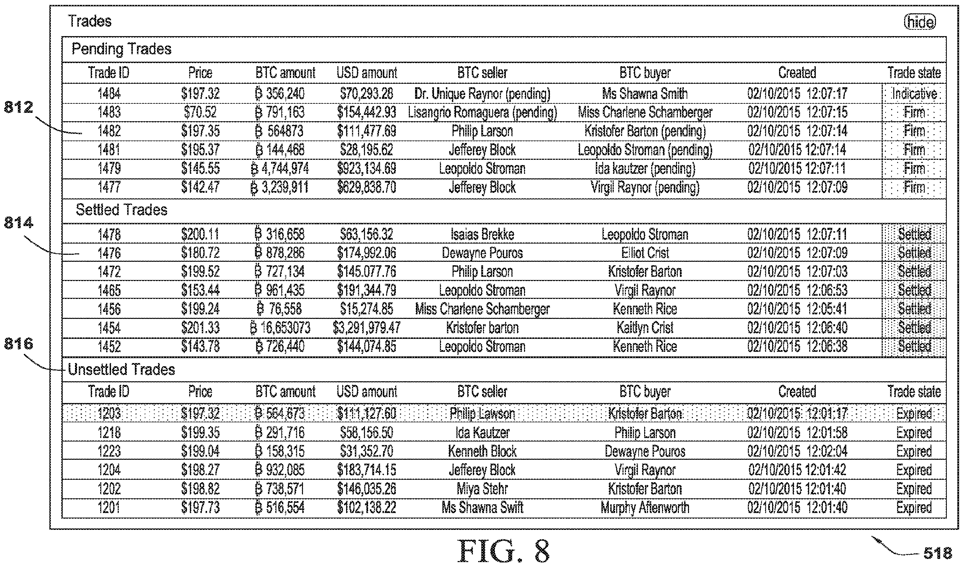

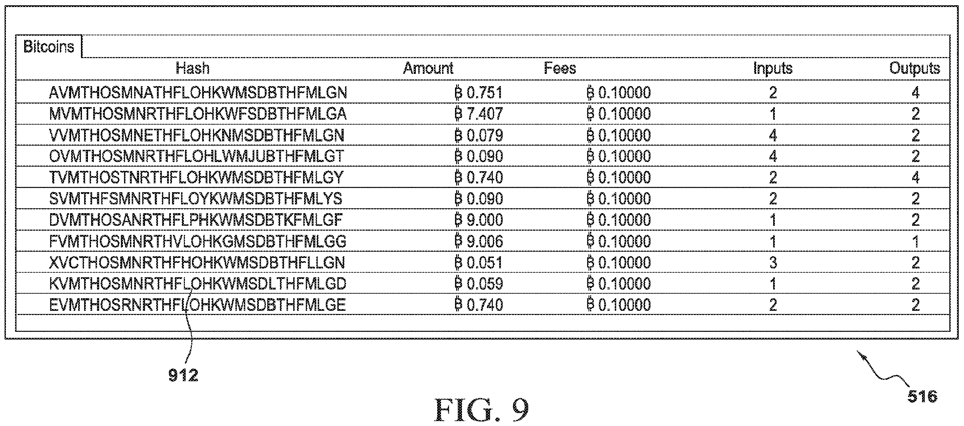

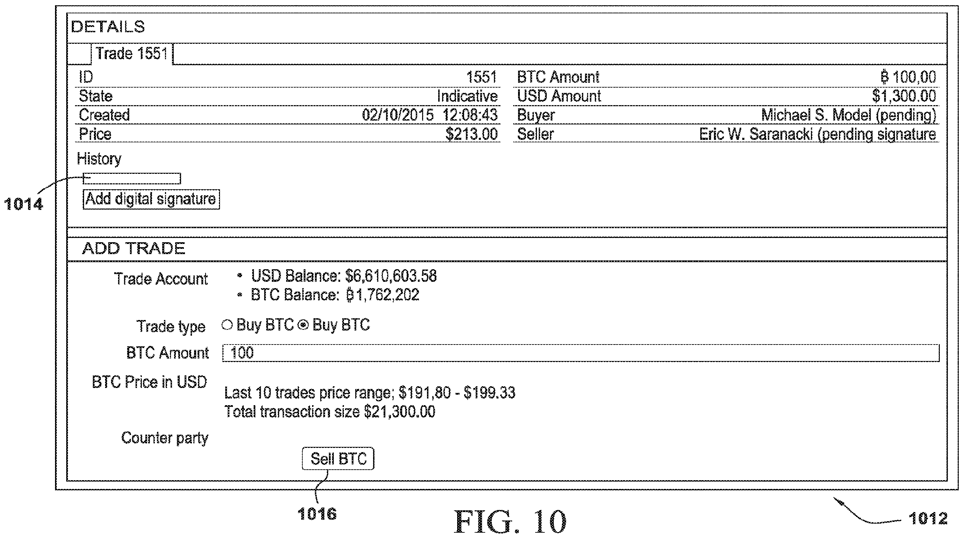

Referring to Figure 5, an exemplary graphical user interface screen shot of a digital asset intermediary electronic settlement platform of the present inventive concept is illustrated. In an embodiment, the screen is divided into a balance history section 512, a statistical data section 514, a trades section 516, and a details section 518. Figure 6 shows a more detailed depiction of the balance history section 512; Figure 7 shows a more detailed depiction of the statistical data section 514; Figure 8 shows a more detailed depiction of the trades section 516; and Figures 9 and 10 show more detailed depictions of the details section 518.

Referring to Figure 6, the balance history section 512 includes a top conventional currency balance line graph 612 of the members and a top digital asset balance line graph 614 of the members. A member's tab 616, an institution's tab 618, a trading desk tab 620, and a trading accounts tab 622 are provided. The members tab includes the member's names 624, conventional currency balances 626, conventional currency credits 628, buy trades 630, and sell trades 632. Likewise, the institutions tab 618 includes the members' clients' names, conventional currency balances, conventional currency credits, buy trades, and sell trades. The trading desk tab 620 includes the trading desk names, conventional currency balances, conventional currency credits, buy trades, and sell trades. The trading accounts tab 622 includes the trading account names, conventional currency balances, conventional currency credits, buy trades, and sell trades.

Referring to Figure 7, the statistical data section 514 includes a top conventional currency balance pie graph 712 of the members and a top digital asset balance pie graph 714 of the members. A top conventional currency credit chart 716 lists the top member's conventional currency credit. A top digital asset balance chart 718 lists the top member's digital asset balance. A top account balance value chart 721 lists the top member's account balance value. A top buy volume chart 723 lists the top member's buy volume. A top sell volume chart 725 lists the top member's sell volume. A top notional volume chart 727 lists the top member's notional volume. A top trade volume chart 729 lists the top member's trade volume.

Referring to Figure 8, the details section 518 further includes a pending trades chart 812 that details the trade ID, price, digital asset amount, conventional currency amount, the digital asset seller, the digital asset buyer, the time created, and the trade status of pending trades. A settled trades chart 814 details the trade ID, price, digital asset amount, conventional currency amount, the digital asset seller, the digital asset buyer, the time created, and the trade status of settled trades. An unsettled trades chart 816 details the trade ID, price, digital asset amount, conventional currency amount, the digital asset seller, the digital asset buyer, the time created, and the trade status of unsettled trades.

Referring to Figure 9, the trades section 516 further includes a digital asset chart 912 that lists the hash, amount, fees, inputs, and outputs of a digital asset transaction. Referring to Figure 10, a trade section 1012 identifies the trade ID, the state, the creation time, the price, the digital asset amount, the conventional currency amount, the buyer, and the seller. An add digital asset signature button 1014 is provided. An add trade section identifies the trading account balances (both digital and established assets). As input fields, the trade section 1012 includes the trade type (buy or sell digital assets), a digital asset amount drop-down menu, the digital asset price in conventional currency denominations, and the counterparty. A sell digital assets button 1016 is provided.

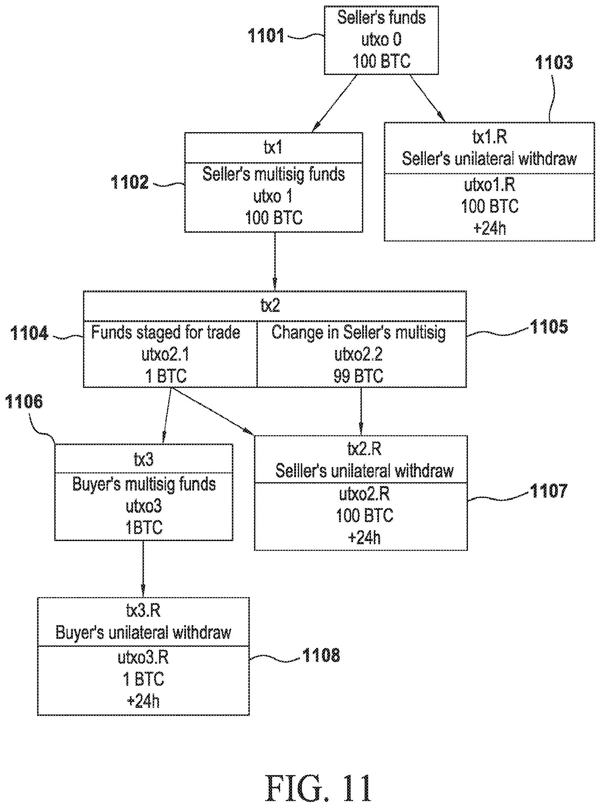

The digital asset intermediary electronic settlement platform server receives trades from authenticated users, performs the trade validation, matching, and settlement, while providing operators and members with the state of each settlement and the credits and balances for each account. Figures 11-19 set forth detailed examples of digital asset intermediary electronic settlement platform processes and states which enable the digital asset intermediary electronic settlement platform of the present inventive concept. In the examples depicted in Figures 11-19, the exemplary digital asset is bitcoin. The digital asset intermediary electronic settlement platform processes include examples of a transaction dependency graph, a digital asset funding process, a redeem refresh process, settlement states, preparing for successful settlement process, successfully matched contra digital asset for conventional currency transaction process, expired settlement process, withdraw from multi-signature wallets to user wallets, and user sign redeem process.

The following describes an exemplary embodiment of the process by which digital assets are transferred to the control of multi-signature wallets. Digital assets rights transferred to the multi-signature wallet will only be recognized as valid for the purpose of settlement if they follow the correct process. If any digital assets rights are transferred to a public key in multi-signature wallets via any other means, the digital asset intermediary electronic settlement platform server automatically authorizes a transaction to send digital assets from multi-signature control back to user control. The digital asset intermediary electronic settlement platform server also refuses to recognize digital asset rights transferred incorrectly as part of the available balance in multi-signature wallets.

Referring to Figure 11, a dependency-diagram showing an example of transaction dependency during the transfer process is shown. Initially, a seller has rights which are, for the purpose of demonstration, represented by the control of an unused transaction output, or utxo, for a number of digital assets in a wallet (say, for example, 100), in which only the seller has control of the private keys (user wallets) (1101). The user wallets generate a transaction (tx1) for transferring digital assets rights (for example, 100) from the user wallet to a multi-signature wallet with input utxo0 and output utxo1 (1102).

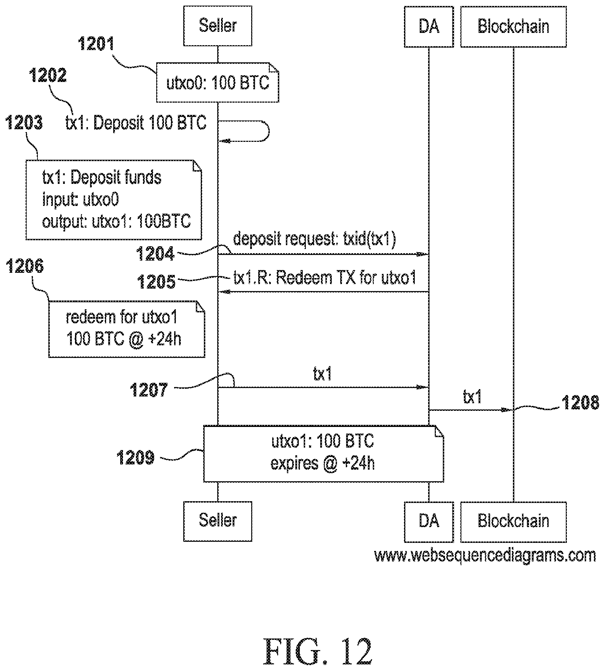

Referring to Figure 12, a sequence-diagram showing an exemplary bitcoin funding process is shown. Again, the seller has the utxo for digital assets controlled by an application in which only the seller has control of the private keys (user wallets) (1201), and the user applications generate a transaction (tx1) for moving digital assets from user control to multi-signature control with input utxo0 and output utxo1 (1202).

The user application hashes details of tx1 (transaction moving digital assets from user control to multi-signature control) into a transaction id (txid(tx1)) (1203). The user application notifies the digital asset intermediary electronic settlement platform server of an impending transfer to multi-signature control by sending txid(tx1) (1204). The digital asset intermediary electronic settlement platform server uses txid(tx1) to generate and sign a redeem transaction (tx1.R) that will become valid in the future (for example, +24 hours), and the digital asset intermediary electronic settlement platform server sends tx1.R to the user wallet (1205). The user wallet confirms tx1.R will be a valid transaction in the future time frame (for example, 24 hours) (1206).

Timelock transactions are transactions that do not become valid in the network until a predetermined time in the future. Details of such transactions can be pre-signed and stored locally by the user, to be broadcast to the network in the future, at which time such details will be added to a block. The user wallet broadcasts redeem transactions directly to the blockchain to avoid giving the digital asset intermediary electronic settlement platform server the opportunity to intercept this message, further establishing that the electronic settlement system does not have any ownership of user digital assets.

In the dependency-graph showing the exemplary process of Figure 11, the seller user application holds a preapproved redeeming transaction or 'redeem' (1103). Referring back to Figure 12, the user application sends tx1 to the digital asset intermediary electronic settlement platform server (1207). The digital asset intermediary electronic settlement platform server checks that tx1 is a valid transaction and then broadcast this to blockchain (1208). After an appropriate number of confirmations in the blockchain, the seller multi-signature application contains an active balance of digital assets in the form of utxo1 for the balance of the time frame (for example, 24 hours) that can be used to settle contra-transactions (1209). If no settlements take place within the time frame (for example, 24 hours), the redeem must be used or refreshed.

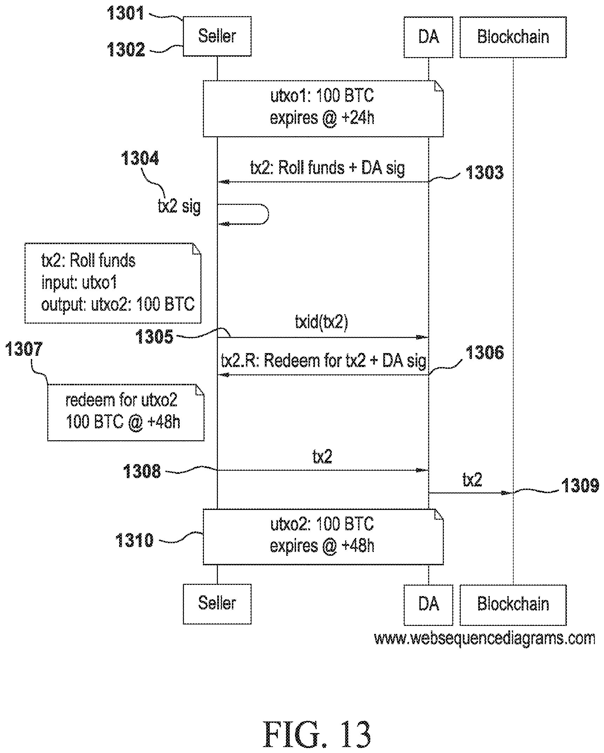

Referring to Figure 13, a sequence-diagram showing an exemplary redeem refresh process is shown. The redeem transaction tx1.R becomes a valid transaction (1301). The seller instructs the digital asset intermediary electronic settlement platform server to refresh funds (1302). The digital asset intermediary electronic settlement platform server creates tx2 - in which the input is utxo1 and the output is utxo2, authorizes tx2, and sends tx2 to the seller multi-signature application (1303). The seller multi-signature application authorizes tx2 (1304). The seller multi-signature application generates a hash of tx2, and creates and sends txid(tx2) to the digital asset intermediary electronic settlement platform server (1305).

The digital asset intermediary electronic settlement platform server uses txid(tx2) to generate and sign a redeem transaction (tx2.R) that will become valid in the future time period (for example, +24 hours), and the digital asset intermediary electronic settlement platform server sends tx2.R to the seller multi-signature application (1306). The seller multi-signature application confirms tx2.R will be a valid transaction in the time period (for example, 24 hours) (1307). The seller multi-signature application sends tx2 to the digital asset intermediary electronic settlement platform server (1308). The digital asset intermediary electronic settlement platform server checks that tx2 is a valid transaction and broadcasts this to blockchain (1309). After an appropriate number of confirmations in the blockchain, seller multi-signature application controls an active balance of digital assets rights in the form of utxo2 for the balance of the time period (for example, 24 hours) that can be used to settle contra-transactions (1310).

For any trade less than the total balance of the seller multi-signature control, granularity of the balances must be introduced and new redeems must be issued. Any transaction that uses an utxo as an input invalidates any other future ledger entries that would use that utxo as an input. Therefore, new redeems must be generated to ensure the user can withdraw rights.

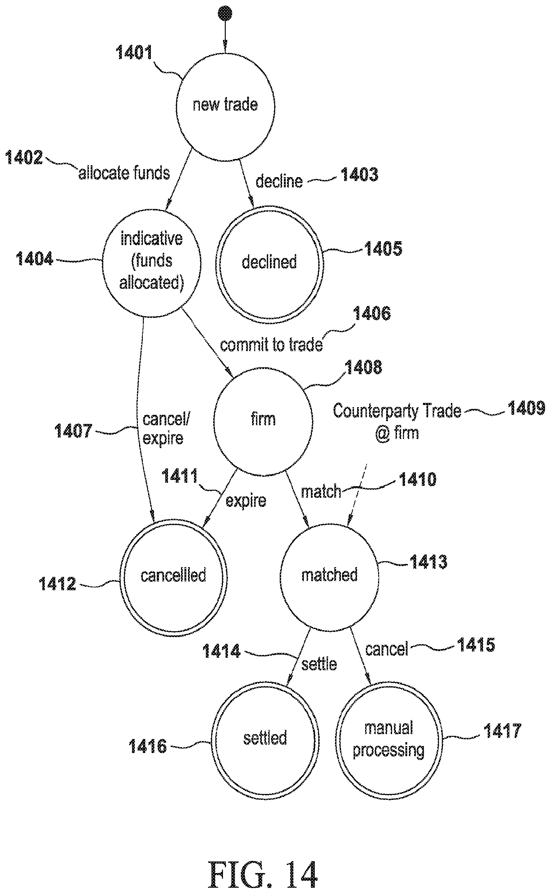

Referring to Figure 14, a state-chart showing exemplary settlement states is shown. The rights are split in the seller multi-signature wallet into two utxo units: one utxo unit will be used to settle a potential transaction; the other utxo unit represents the remaining balance under control of the application. A new settlement state is entered (1401). The electronic settlement platform credit manager earmarks from the seller's balance and reserves rights for the impending transaction (1402). If the fund earmarking is denied (1403), then a declined state is entered (1405); if the rights are earmarked, then the seller settlement state becomes indicative (1404).

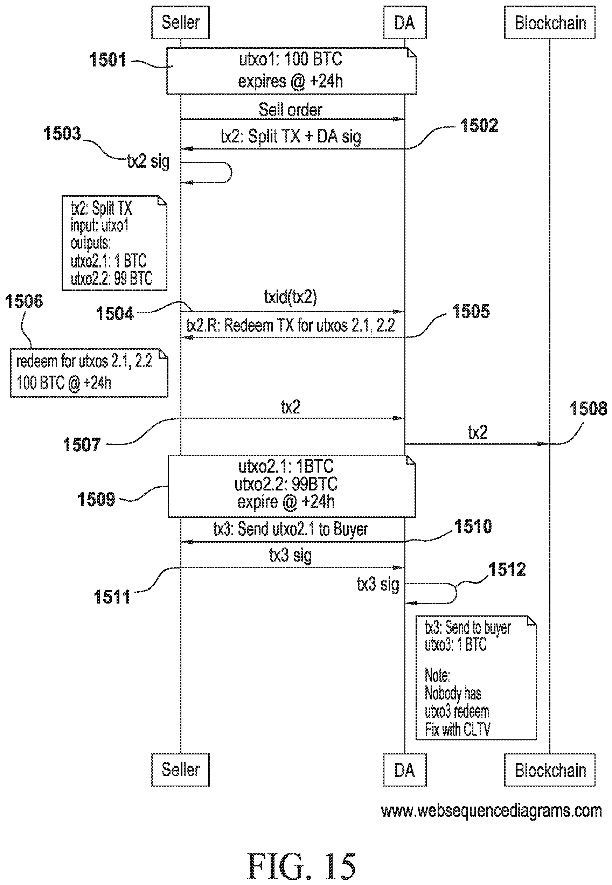

Referring to Figure 15, an exemplary staging of unused transaction outputs ("utxos") for successful settlement process is shown. It shall be understood that the present inventive concept is not limited to exemplary utxo implementations, and is compatible with alternate distributed ledger implementations, such as, for example, Ethereum, without limitation. Here, the seller notifies the digital asset intermediary electronic settlement platform server via using the trade entry tool of the indicative trade (1501). As is shown in Figure 10, toggle for buy / sell, digital asset quantity (in the Figure 10 example, BTC Amount), Price, and Counterparty are displayed. The seller reports quantity, price, and counterparty to the digital asset intermediary electronic settlement platform server. In the exemplary rights state shown in Figure 14, the seller multi-signature wallet is staged for settlement (1104).

In Figure 15, the digital asset intermediary electronic settlement platform server creates and authorizes tx2, in which the input is utxo1 and the outputs are utxo2.1 and utxo2.2 (1502). Both utxo2.1 and utxo2.2 destinations are to an address owned by the seller in the seller multi-signature application. The seller multi-signature application authorizes tx2 (1503). The seller multi-signature application generates hash of tx2, thus creating and sending txid(tx2) to the digital asset intermediary electronic settlement platform server (1504). The digital asset intermediary electronic settlement platform server uses txid(tx2) to generate and sign two redeem transactions (collectively, tx2.R) that will become valid in the future time frame (for example, +24 hours), and the digital asset intermediary electronic settlement platform server sends tx2.R to the seller multi-signature wallet (1505). The seller multi-signature application confirms tx2.R will be valid transactions in the time frame (for example, 24 hours) (1506). The seller multi-signature application sends tx2 to the digital asset intermediary electronic settlement platform server (1507). The digital asset intermediary electronic settlement platform server checks that tx2 is a valid transaction and broadcasts this to the blockchain (1508).

The seller multi-signature application now controls the digital asset rights balance (for example, 100) between utxo2.1 and utx2.2 (1509). In the exemplary rights state seen in Figure 11, state (1105) of the utxos in the multi-signature wallet is seen. State (1107) refers to the seller's valid redeems for utxo2.1 and utxo2.2 should no settlement occur after rights have been earmarked. The digital asset intermediary electronic settlement platform server creates tx3 with input utxo2.1, output utxo3, and destination buyer. In

Figure 15, the digital asset intermediary electronic settlement platform server sends tx3 to the seller multi-signature application (1510). The seller multi-signature application authorizes and sends tx3 to the digital asset intermediary electronic settlement platform server (1511).

In the exemplary settlement states seen in Figure 14, if no message containing the seller authorization is received, then cancel / expire occurs (1407), and the state goes to cancelled (1412). The message containing the seller multi-signature application signature of tx3 commits the seller to settle (1406). At this point, the settlement system is awaiting the buy side to report the contra side of the trade. The settlement state changes to firm (1408). State (1409) is the process of a buyer reporting a trade to the digital asset intermediary electronic settlement platform trade entry tool which can be found in state (1408), but from the buyer's perspective. The settlement system can remain in this settlement state for a period of time (for example, 15 minutes); after the settlement state, a firm state will become be "matched" (1410) or "expired" (1411). If expired (1411), the state goes to cancelled (1412). If matched, the state goes to matched (1413). Equally, the buy side of a settlement can occur first and then the matching engine is awaiting the seller to undergo the process as described above.

A buyer must have sufficient buying power and be acting according to the rules of the buyer's member in order to be eligible to settle a transaction. Sufficient buying power is dictated by the buyer's member and may represent some credit capacity issued by the member; however, the member also must have sufficient conventional currency in its settlement system settlement account in order to move conventional currency from the buyer member to the seller member. Similarly, the seller must be acting according to seller's member rules and that member client must have sufficient digital assets available to settle.

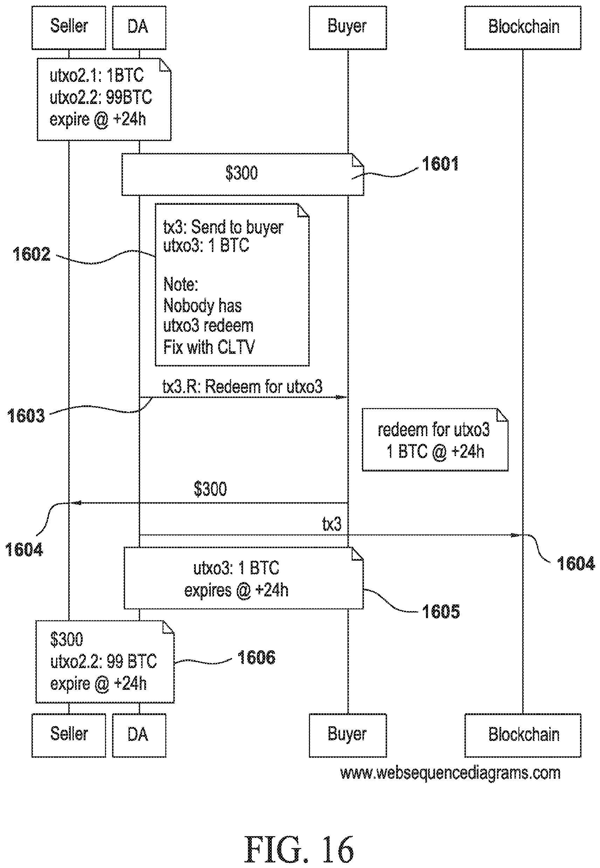

Referring to Figure 16, a sequence-diagram shows an example of a successfully matched contra digital asset/conventional currency transaction process. The buyer has conventional currency credit with the buyer's member (1601). The buyer notifies the digital asset intermediary electronic settlement platform server using the trade entry tool of the indicative settlement. As is seen in Figure 7, toggle for buy / sell, digital asset quantity (in the Figure 7 example, BTC Amount), Price, and Counterparty are displayed.

In the exemplary settlement states shown in Figure 14, the digital asset credit manager earmarks funds from the buyer's credit and reserves for the impending transaction (1402). The buyer's reporting of the trade to the digital asset intermediary electronic settlement platform commits the buyer to settle (1406). The buyer settlement state becomes firm (1408). The digital asset intermediary electronic settlement platform matching engine confirms that the seller firm offer and the buyer firm bid are matching contra-transactions (1410). The seller firm state and the buyer firm state merge into a matched state (1413).

Referring back to Figure 16, the digital asset intermediary electronic settlement platform server authorizes tx3 with inputs utxo 2.1, destination buyer multi-signature application, and output uxto3 (1602). This is also seen in Figure 15 (1512). The digital asset intermediary electronic settlement platform server creates a hash of tx3, thus creating and sending txid(tx3) to the buyer multi-signature application (1603). The digital asset intermediary electronic settlement platform server sends a message to the member to transfer conventional currency from the buying member's account to the selling member's account at the same moment that the digital asset intermediary electronic settlement platform server broadcasts tx3 to the blockchain (1604). Movement of rights and funds is subject to member controls, and the members are notified that rights and funds have been requested to move. In the exemplary settlement states shown in Figure 14, the matched state settles (1414) into a settled state (1416). A 'declined' state (1405) shows that a settlement has been identified as a bad transaction and refused by the digital asset intermediary electronic settlement platform and the attempted settlement does not advance beyond the attempt to report to the system via the trade entry tool. The digital asset intermediary electronic settlement platform cannot prevent the digital asset from moving if the transaction has both signatures, but in the manual process state (1417) the member can freeze the conventional currency from both sides of the transaction if the transaction comes under dispute for any reason.

In the exemplary funds states shown in Figure 11, the buyer's multi-signature rights are staged for settlement (1106). Back to Figure 16, the buyer multi-signature application now contains utxo3 with tx3.R that contains an active settlement system settlement balance of a single digital asset for the time frame (for example, 24 hours) (1605). The seller multi-signature application now contains utxo2.2 with tx2.R that contains an active settlement system settlement balance of digital assets (for example, 99) for the time frame (for example, 24 hours) (1606).

Firm settlement states are only active for a specified period (for example, 15 minutes). In order to show that the digital asset intermediary electronic settlement platform has forfeited its ability to settle a transaction after the settlement state has elapsed, the digital asset intermediary electronic settlement platform creates a transaction to send digital assets directly to the seller multi-signature application using the rights earmarked for the expired settlement. The use of the rights represented by a utxo in a different transaction invalidates any future attempt to reuse the rights in another transaction. After the specified period has lapsed, the settlement state is changed to 'expired' (1411) in Figure 14.

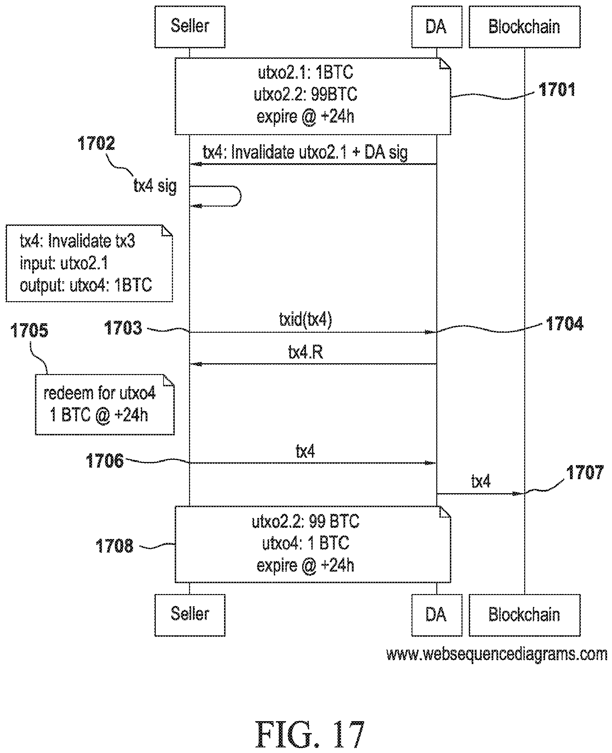

Referring to Figure 17, a sequence-diagram showing an exemplary expired settlement process is shown. The digital asset intermediary electronic settlement platform server creates tx4 with input utxo2.1, destination seller multi-signature application, output utxo4, and the digital asset intermediary electronic settlement platform server authorizes and sends to the seller multi-signature application (1701). The seller multi-signature application authorizes tx4 (1702). The seller multi-signature application creates a hash of tx4, thus creating and sending txid(tx4) to the digital asset intermediary electronic settlement platform server (1703).

The digital asset intermediary electronic settlement platform server uses txid(tx4) to generate and sign a redeem transaction (tx4.R) that will become valid in the future (for example, +24 hours), and the digital asset intermediary electronic settlement platform server sends tx4.R to the seller multi-signature application (1704). The seller multi-signature application confirms tx4.R will be a valid transaction in the specified period of time (for example, 24 hours) (1705). The seller multi-signature application sends tx4 to the digital asset intermediary electronic settlement platform server (1706). The digital asset intermediary electronic settlement platform server checks that tx4 is a valid transaction and broadcasts this to blockchain (1707). The settlement state is now 'canceled' (1412) in Figure 14. The seller multi-signature application now controls a digital asset rights balance (for example, 100) between utxo4 and utx2.2, with valid redeems tx2.R and tx4.R (1708).

At any time, users can transfer digital assets rights from the settlement system. The user can either request an immediate withdrawal or the user can unilaterally sign an active redeem. Withdrawals and redeems can only transfer to an application controlled address already known to and authorized by the digital asset intermediary electronic settlement platform servers. This ensures the recipient of the digital asset rights leaving the network is the rightful owner of the rights.

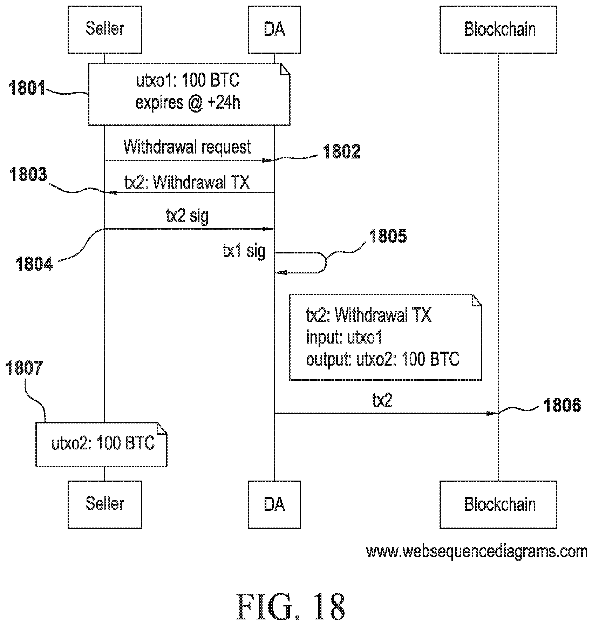

Referring to Figure 18, a sequence-diagram showing an example of a withdraw from a multi-signature application to a user application process is seen. The user multi-signature application has active control over a balance of digital assets rights (for example, 100) in form of utxo1, with redeem tx1.R that will activate in a time period (for example, 24 hours) (1801). The multi-signature application notifies the digital asset intermediary electronic settlement platform server of withdrawal via the trade entry tool (1802). The digital asset intermediary electronic settlement platform server creates tx2 with input utxo1, destination user application, and sends to the multi-signature application (1803). The multi-signature application (1803) authorizes and sends tx2 to the digital asset intermediary electronic settlement platform server (1804). The digital asset intermediary electronic settlement platform server checks that tx2 is a valid transaction and authorizes tx2 (1805). The digital asset intermediary electronic settlement platform server broadcasts tx2 to the blockchain (1806). The user application now has control over a balance of digital assets rights (for example, 100) (1807).

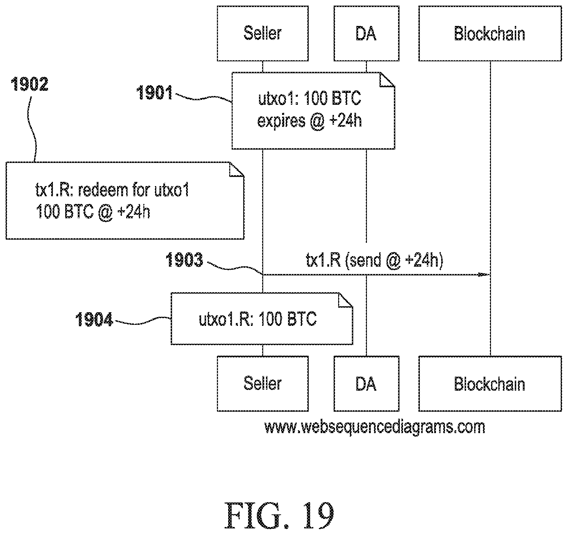

Referring to Figure 19, a sequence-diagram shows an exemplary user unilateral redeem process. The multi-signature application has control over an active balance of digital assets rights (for example, 100) in the form of utxo1 with redeem tx1.R that will activate in a specified time period (for example, 24 hours) (1901). The specified period (for example, 24 hours) elapses without creating a new future valid redeem date and without settling a transaction (1902). The multi-signature application authorizes tx1.R and broadcasts this to the blockchain (1903, 1103). In the exemplary funds states seen in Figure 11, seller's unilateral withdraw state (1103) is one way to initiate a redeem, or the digital asset intermediary electronic settlement platform has already committed to send the rights out of the digital asset intermediary electronic settlement platform by authorizing a time-locked transaction, with the result that the seller can 'unilaterally' decide to withdraw at will. The user application now has control over a balance of digital assets rights (for example, 100) (1904).

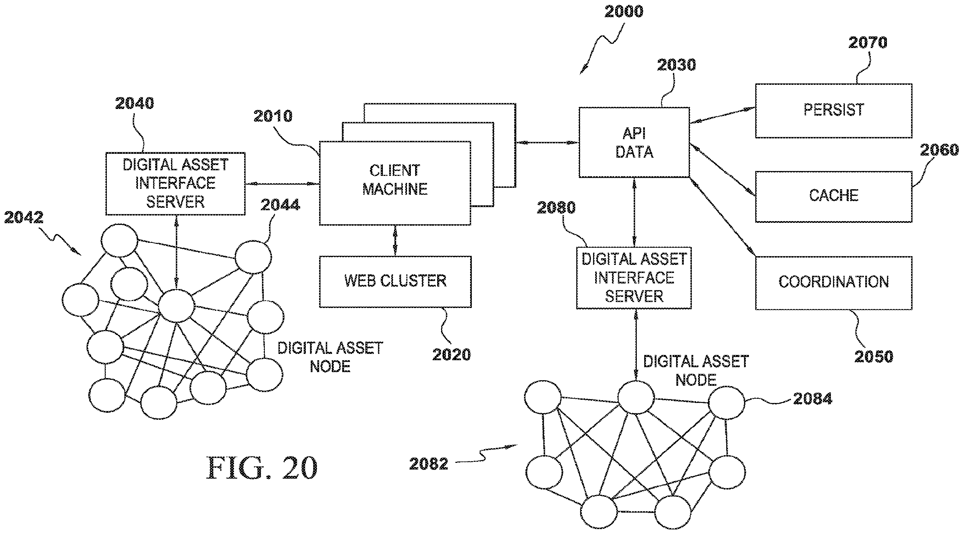

Referring to Figure 20, an exemplary embodiment system that can be used to implement the present inventive concept is indicated generally by the reference numeral 2000. This example is only one of several alternatives that are contemplated by the current inventive concept and is intended to be non-limiting. User access computers 2010 are shown having a web browser-based user interface. The user access computers interface with a web server cluster 2020 and a data API cluster 2030. The user access computers may alternatively, depending on the user's role, access a digital asset intermediary electronic settlement platform server 2040 residing locally within the user's infrastructure or one hosted by a third party, and associated cluster 2042 of digital asset nodes 2044. The web server cluster serves HyperText Markup Language (HTML) and JavaScript-based user interface via HyperText Transfer Protocol (HTTP) over Transport Layer Security (TLS). The data API cluster interfaces with a coordination service cluster 2050, cache service cluster 2060, persistence service cluster 2070; as well as a digital asset interface server 2080, and associated cluster 2082 of digital asset nodes 2084. The persistence service cluster of the persistence server 2070 stores key values and holds values on disk for long term storage. The values stored in the persistence service cluster are immutable, allowing the values to be cached by the caching service cluster. The coordination service cluster of the coordination server 2050 contains mutable data, namely the mapping of names to root keys in the persistence service. The digital asset interface clusters 2042 and 2082, and digital asset intermediary electronic settlement platform servers 2040 and 2080, interact with the digital asset peer to peer network and hold immutable private keys. The digital asset intermediary electronic settlement platform servers may optionally connect to the user through a second factor authentication means such as, but not limited to, Short Message Service (SMS), email or dedicated hardware device.

The interface between the user access computers and the web server cluster, the data API cluster infrastructure and the digital asset intermediary electronic settlement platform servers should include, but not be limited to: wide area network connectivity, local area network connectivity, appropriate network switches and routers, electrical power, backup power, storage area network hardware, server-class computing hardware, personal computers, tablets, smartphones, and an operating system.

The data API cluster can run, for example, on a cluster of servers using multiple and/or multi-core processors, RAM, high-throughput network controllers, hot plug SSD and SATA drives, and redundant power supplies, for example.

While the inventive concept has been described by way of example with respect to exemplary embodiments; other alternatives, modifications, and variations are included within the scope of the appended claims.

## Claims

1. A program storage device tangibly embodying a program of instructions executable by a digital asset intermediary electronic settlement platform server to:
receive from a user wallet for which only a first user has control of a private key for controlling the user wallet details of a first transaction hashed into a transaction ID, wherein the first transaction transfers a digital asset from the user wallet to a first multi-signature settlement wallet containing a first private key under the control of the first user and a second private key under the control of the intermediary electronic settlement platform server;
use the transaction ID to generate and sign a redeem transaction which authorizes the redemption of digital assets from the first multi-signature settlement wallet back to the user wallet after the passage of a specified period of time;
send the redeem transaction to the user wallet;
receive from the user wallet the first transaction, check that the first transaction is a valid transaction and then broadcast the first transaction to a distributed ledger;
receive from the first user an authorization for a conditional transaction with a second user involving the digital asset, wherein the conditional transaction transfers the digital asset from control of the first multi-signature settlement wallet to control of a second multi-signature settlement wallet containing the second private key and a third private key under the control of the second user;
match the authorization for transaction from the first user with an authorization for transaction from the second user;
settle the transaction between the first and the second users if the conditional is met; and
memorialize the settled transaction on the distributed ledger.

2. The program storage device of Claim 1 wherein at least one of the digital assets represents digitized ownership of a conventional asset.

3. The program storage device of Claim 1, further comprising a program instruction to receive from the first user an electronic mechanism for redemption.

4. The program storage device of Claim 3 wherein, if the transaction does not settle because the conditional is not met, the electronic mechanism for redemption is invoked.

5. A digital asset settlement method comprising:
receiving from a user wallet for which only a first user has control of a private key for controlling the user wallet details of a first transaction hashed into a transaction ID, wherein the first transaction transfers a digital asset from the user wallet to a first multi-signature settlement wallet containing a first private key under the control of the first user and a second private key under the control of an intermediary electronic settlement platform server;
using the transaction ID to generate and sign a redeem transaction which authorizes the redemption of digital assets from the first multi-signature settlement wallet back to the user wallet after the passage of a specified period of time;
sending the redeem transaction to the user wallet;
receiving from the user wallet the first transaction, checking that the first transaction is a valid transaction and then broadcasting the first transaction to a distributed ledger;
receiving from the first user an authorization for a conditional transaction with a second user involving the digital asset wherein the conditional transaction transfers the digital asset from control of the first multi-signature settlement wallet to control of a second multi-signature settlement wallet containing the second private key and a third private key under the control of the second user;
matching the authorization for transaction from the first user with an authorization for transaction from the second user;
settling the transaction between the first and the second users if the conditional is met; and
memorializing the settled transaction on the distributed ledger.

6. The method of Claim 5 wherein at least one of the digital assets represents digitized ownership of a conventional asset.

7. The method of Claim 5, further comprising receiving from the first user an electronic mechanism for redemption.

8. The method of Claim 7 wherein, if the transaction does not settle because the conditional is not met, the electronic mechanism for redemption is invoked.

9. The method of Claim 7 wherein the electronic mechanism for redemption permits the unilateral withdrawal of applicable assets, rights, funds, or contracts, by a depositing user at a preset time in the future.

10. The method of Claim 7 wherein the electronic mechanism for redemption comprises a pre-signed authorization for redemption for use in a redeem transaction.

11. The method of Claim 7 wherein the electronic mechanism for redemption is automatically invoked.

## Patentansprüche

1. Programmspeichergerät, das tangibel ein Programm mit Anweisungen verkörpert, die von einem Server einer zwischengeschalteten elektronischen Abwicklungsplattform für digitale Assets ausführbar sind, um:
von einer Benutzer-Wallet, für die nur ein erster Benutzer die Kontrolle eines privaten Schlüssels zum Kontrollieren der Benutzer-Wallet hat, Details einer ersten, in eine Transaktions-ID gehashte Transaktion zu empfangen, wobei die erste Transaktion ein digitales Asset von der Benutzer-Wallet auf eine erste Multi-Signatur-Abwicklungs-Wallet überträgt, die einen ersten privaten Schlüssel unter der Kontrolle des ersten Benutzers und einen zweiten privaten Schlüssel unter der Kontrolle des Servers der zwischengeschalteten elektronischen Abwicklungsplattform enthält;
die Transaktions-ID zu verwenden, um eine Einlösungstransaktion zu generieren und zu signieren, die die Einlösung digitaler Assets aus der ersten Multi-Signatur-Abwicklungs-Wallet zurück in die Benutzer-Wallet nach Ablauf einer bestimmten Zeitspanne autorisiert;
die Einlösungstransaktion an die Benutzer-Wallet zu senden;
die erste Transaktion von der Benutzer-Wallet zu empfangen, zu überprüfen, ob die erste Transaktion eine gültige Transaktion ist, und dann die erste Transaktion an ein verteiltes Ledger zu senden;
vom ersten Benutzer eine Autorisierung für eine bedingte Transaktion mit einem zweiten Benutzer zu empfangen, die das digitale Asset betrifft, wobei die bedingte Transaktion das digitale Asset von der Kontrolle über die erste Multi-Signatur-Abwicklungs-Wallet an die Kontrolle über eine zweite Multi-Signatur-Abwicklungs-Wallet überträgt, die den zweiten privaten Schlüssel und einen dritten privaten Schlüssel unter der Kontrolle des zweiten Benutzers enthält;
die Autorisierung für die Transaktion vom ersten Benutzer mit einer Autorisierung für die Transaktion vom zweiten Benutzer abzugleichen;
die Transaktion zwischen dem ersten und dem zweiten Benutzer abzuwickeln, wenn die Bedingung erfüllt ist; und
sich die abgewickelte Transaktion im verteilen Ledger zu merken.

2. Programmspeichergerät nach Anspruch 1, wobei mindestens eines der digitalen Assets ein digitalisiertes Eigentum an einem herkömmlichen Asset darstellt.

3. Programmspeichergerät nach Anspruch 1, ferner umfassend eine Programmanweisung, um vom ersten Benutzer einen elektronischen Mechanismus zur Einlösung zu empfangen.

4. Programmspeichergerät nach Anspruch 3, wobei, wenn die Transaktion nicht abgewickelt wird, weil die Bedingung nicht erfüllt ist, der elektronische Mechanismus zur Einlösung aufgerufen wird.

5. Abwicklungsverfahren für digitale Assets, umfassend:
Empfangen von einer Benutzer-Wallet, für die nur ein erster Benutzer die Kontrolle eines privaten Schlüssels zum Kontrollieren der Benutzer-Wallet hat, von Details einer ersten, in eine Transaktions-ID gehashte Transaktion, wobei die erste Transaktion ein digitales Asset von der Benutzer-Wallet auf eine erste Multi-Signatur-Abwicklungs-Wallet überträgt, die einen ersten privaten Schlüssel unter der Kontrolle des ersten Benutzers und einen zweiten privaten Schlüssel unter der Kontrolle eines Servers einer zwischengeschalteten elektronischen Abwicklungsplattform enthält;
Verwenden der Transaktions-ID, um eine Einlösungstransaktion zu generieren und zu signieren, die die Einlösung digitaler Assets aus der ersten Multi-Signatur-Abwicklungs-Wallet zurück in die Benutzer-Wallet nach Ablauf einer bestimmten Zeitspanne autorisiert;
Senden der Einlösetransaktion an die Benutzer-Wallet;
Empfangen der ersten Transaktion von der Benutzer-Wallet, Überprüfen, ob die erste Transaktion eine gültige Transaktion ist, und dann Senden der ersten Transaktion an ein verteiltes Ledger;
Empfangen, vom ersten Benutzer, einer Autorisierung für eine bedingte Transaktion mit einem zweiten Benutzer, die das digitale Asset betrifft, wobei die bedingte Transaktion das digitale Asset von der Kontrolle über die erste Multi-Signatur-Abwicklungs-Wallet an die Kontrolle über eine zweite Multi-Signatur-Abwicklungs-Wallet überträgt, die den zweiten privaten Schlüssel und einen dritten privaten Schlüssel unter der Kontrolle des zweiten Benutzers enthält;
Abgleichen der Autorisierung für die Transaktion vom ersten Benutzer mit einer Autorisierung für die Transaktion vom zweiten Benutzer;
Abwickeln der Transaktion zwischen dem ersten und dem zweiten Benutzer, wenn die Bedingung erfüllt ist; und
Merken der abgewickelten Transaktion im verteilen Ledger.

6. Verfahren nach Anspruch 5, wobei mindestens eines der digitalen Assets ein digitalisiertes Eigentum an einem herkömmlichen Asset darstellt.

7. Verfahren nach Anspruch 5, ferner umfassend das Empfangen eines elektronischen Mechanismus zur Einlösung vom ersten Benutzer.

8. Verfahren nach Anspruch 7, wobei, wenn die Transaktion nicht abgewickelt wird, weil die Bedingung nicht erfüllt ist, der elektronische Mechanismus zur Einlösung aufgerufen wird.

9. Verfahren nach Anspruch 7, wobei der elektronische Mechanismus zur Einlösung die einseitige Abhebung anwendbarer Assets, Rechte, Gelder oder Verträge durch einen einzahlenden Benutzer zu einem voreingestellten Zeitpunkt in der Zukunft erlaubt.

10. Verfahren nach Anspruch 7, wobei der elektronische Mechanismus zur Einlösung eine vorsignierte Autorisierung zur Einlösung zur Verwendung in einer Einlösungstransaktion umfasst.

11. Verfahren nach Anspruch 7, wobei der elektronische Mechanismus zur Einlösung automatisch aufgerufen wird.

## Revendications

1. Dispositif de stockage de programme mettant en oeuvre de manière tangible un programme d'instructions exécutables par un serveur de plateforme de règlement électronique intermédiaire d'un bien numérique pour :
recevoir en provenance d'un portefeuille d'utilisateur pour lequel seul un premier utilisateur a le contrôle d'une clé privée pour commander les détails du portefeuille d'utilisateur d'une première transaction hachée en un ID de transaction, dans lequel la première transaction transfère un bien numérique du portefeuille d'utilisateur à un premier portefeuille de règlement multi-signature contenant une première clé privée sous le contrôle du premier utilisateur et une deuxième clé privée sous le contrôle du serveur de plateforme de règlement électronique intermédiaire ;
utiliser l'ID de transaction pour générer et signer une transaction de rachat qui autorise le remboursement des biens numériques du premier portefeuille de règlement multi-signature vers le portefeuille d'utilisateur après l'écoulement d'une période de temps spécifiée ;
envoyer la transaction de rachat au portefeuille d'utilisateur ;
recevoir du portefeuille d'utilisateur la première transaction, vérifier que la première transaction est une transaction valide, puis diffuser la première transaction vers un registre distribué ;
recevoir du premier utilisateur une autorisation pour une transaction conditionnelle avec un second utilisateur impliquant le bien numérique, dans lequel la transaction conditionnelle transfère le bien numérique du contrôle du premier portefeuille de règlement multi-signature au contrôle d'un second portefeuille de règlement multi-signature contenant la deuxième clé privée et une troisième clé privée sous le contrôle du second utilisateur ;
faire correspondre l'autorisation de transaction provenant du premier utilisateur avec une autorisation de transaction provenant du second utilisateur ;
régler la transaction entre les premier et second utilisateurs si la condition est remplie ; et mémoriser la transaction réglée sur le registre distribué.

2. Dispositif de stockage de programmes selon la revendication 1, dans lequel au moins un des biens numériques représente la propriété numérisée d'un bien conventionnel.

3. Dispositif de stockage de programme selon la revendication 1, comprenant en outre une instruction de programme pour recevoir du premier utilisateur un mécanisme électronique de remboursement.

4. Dispositif de stockage de programme selon la revendication 3, dans lequel, si la transaction n'est pas réglée parce que la condition n'est pas remplie, le mécanisme électronique de remboursement est invoqué.

5. Procédé de règlement d'un bien numérique comprenant :
la réception d'un portefeuille utilisateur pour lequel seul un premier utilisateur a le contrôle d'une clé privée pour contrôler les détails de portefeuille utilisateur d'une première transaction hachés dans un ID de transaction, dans lequel la première transaction transfère un bien numérique du portefeuille utilisateur vers un premier portefeuille de règlement multi-signature contenant une première clé privée sous le contrôle du premier utilisateur et une deuxième clé privée sous le contrôle d'un serveur de plateforme de règlement électronique intermédiaire ;
l'utilisation de l'ID de transaction pour générer et signer une transaction de rachat qui autorise le remboursement de biens numériques du premier portefeuille de règlement multi-signature au portefeuille d'utilisateur après l'écoulement d'une période de temps spécifiée ;
l'envoi de la transaction de rachat au portefeuille d'utilisateur ;
la réception en provenance du portefeuille utilisateur de la première transaction, la vérification que la première transaction est une transaction valide, puis la diffusion de la première transaction vers un registre distribué ;
la réception en provenance du premier utilisateur d'une autorisation pour une transaction conditionnelle avec un second utilisateur impliquant le bien numérique, dans lequel la transaction conditionnelle transfère le bien numérique du contrôle du premier portefeuille de règlement multi-signature au contrôle d'un second portefeuille de règlement multi-signature contenant la deuxième clé privée et une troisième clé privée sous le contrôle du second utilisateur ;
la mise en correspondance de l'autorisation de transaction provenant du premier utilisateur avec une autorisation de transaction provenant du second utilisateur ;
le règlement de la transaction entre les premier et second utilisateurs si la condition est remplie ; et
la mémorisation de la transaction réglée sur le registre distribué.

6. Procédé selon la revendication 5, dans lequel au moins un des biens numériques représente la propriété numérisée d'un bien conventionnel.

7. Procédé selon la revendication 5, comprenant en outre la réception en provenance du premier utilisateur d'un mécanisme électronique de remboursement.

8. Procédé selon la revendication 7, dans lequel, si la transaction n'est pas réglée parce que la condition n'est pas remplie, le mécanisme électronique de remboursement est invoqué.

9. Procédé selon la revendication 7, dans lequel le mécanisme électronique de remboursement permet le retrait unilatéral de biens, droits, fonds ou contrats applicables, par un utilisateur déposant à un moment prédéfini dans le futur.

10. Procédé selon la revendication 7, dans lequel le mécanisme électronique de remboursement comprend une autorisation pré-signée de remboursement pour utilisation dans une transaction de rachat.

11. Procédé selon la revendication 7, dans lequel le mécanisme électronique de remboursement est automatiquement invoqué.
